# EUROPEAN PATENT APPLICATION

(11) **EP 4 744 984 A1**
(43) Date of publication of application: **20.05.2026**
(21) Application number: 25212232.0
(22) Date of filing: 30.10.2025
(51) Int. Cl.: B60T 13/74, F16D 65/18, F16D 55/226, F16D 65/00

(54) **ELECTRONIC MECHANICAL BRAKING CALIPER, BRAKING SYSTEM AND VEHICLE**

(30) Priority: 06.11.2024 CN 202411579051
(71) Applicant: Xiaomi EV Technology Co., Ltd., Beijing 100176 (CN)
(72) Inventor: YANG, Lei, Beijing, 100176 (CN); YANG, Deqiang, Beijing, 100176 (CN); XU, Jie, Beijing, 100176 (CN); PEI, Jinhua, Beijing, 100176 (CN)
(74) Representative: Stöckeler, Ferdinand

(57) **Abstract**

The present invention provides an electronic mechanical braking caliper, a braking system and a vehicle. The electronic mechanical braking caliper includes a caliper body (1); a brake pad, and a driving module (3), where the driving module includes at least one driving portion (31), a transmission mechanism (32), at least one speed reduction mechanism (33) and at least one piston assembly, the driving portion (31) is in transmission connection with the speed reduction mechanism (33) through the transmission mechanism (32), the speed reduction mechanism (33) and the piston assembly are arranged in a one-to-one corresponding manner, and the speed reduction mechanism (33) is in transmission connection with the corresponding piston assembly; and the piston assembly moves in a first direction (A) to abut against the brake pad and drive the brake pad to move.

## Description

### TECHNICAL FIELD

The present invention relates to the technical field of braking, and in particular to an electronic mechanical braking caliper, a braking system and a vehicle.

### BACKGROUND OF THE INVENTION

A braking system of a vehicle is used to forcibly brake wheels to some extent by applying a braking force to the wheels. A braking control system functions to forcibly decelerate or even stop a traveling vehicle according to the requirements of a driver or a controller, or to stably park a stopped vehicle under various road conditions (for example, on a ramp), or to maintain speed stability of a vehicle traveling downhill.

Hydraulic braking is typically used in a traditional braking system, but a hydraulic system is costly with complex layout, slow response, low energy efficiency and high redundancy. In view of that, an electronic mechanical braking (EMB) system has emerged. It has a variety of characteristics including simple layout and rapid response, and can better satisfy the requirements of rapid development of automotive technology, especially the requirement of electrical automation development of automobiles.

However, a braking caliper of the EMB system typically has the problem of an insufficient braking capability in the related art.

### SUMMARY OF THE INVENTION

The present invention provides an electronic mechanical braking caliper, a braking system and a vehicle, so as to overcome defects in the related art.

A first aspect of the present invention provides an electronic mechanical braking caliper. The electronic mechanical braking caliper includes:
a caliper body;
a brake pad arranged on the caliper body; and
a driving module arranged on the caliper body, where
   the driving module includes at least one driving portion, a transmission mechanism, at least one speed reduction mechanism and at least one piston assembly,
   the driving portion is in transmission connection with the speed reduction mechanism through the transmission mechanism, the speed reduction mechanism and the piston assembly are arranged in a one-to-one corresponding manner, and the speed reduction mechanism is in transmission connection with the corresponding piston assembly; and
   the piston assembly moves in a first direction to abut against the brake pad and drive the brake pad to move.

Optionally, the transmission mechanism includes at least one input gear and at least one intermediate gear, where
the input gear is in transmission connection with the driving portion in a one-to-one corresponding manner, and the intermediate gear meshes with the input gear; and
the intermediate gear is in transmission connection with the speed reduction mechanism.

Optionally, one driving portion, one input gear, one speed reduction mechanism and one piston assembly are arranged, and the input gear is in transmission connection with the speed reduction mechanism through the at least one intermediate gear; or
one driving portion and one input gear are arranged, two speed reduction mechanisms and two piston assemblies are arranged, and the input gear is in transmission connection with the two speed reduction mechanisms through the at least one intermediate gear; or
two driving portions, two input gears, two speed reduction mechanisms and two piston assemblies are arranged, and the two input gears are in transmission connection with the two speed reduction mechanisms through the at least one intermediate gear; or
two driving portions and two input gears are arranged, three speed reduction mechanisms and three piston assemblies are arranged, and the two input gears are in transmission connection with the three speed reduction mechanisms through the at least one intermediate gear.

Optionally, the two driving portions include a first driving portion and a second driving portion;
the two input gears include a first input gear and a second input gear; the at least one intermediate gear includes a first intermediate gear and a second intermediate gear, the first intermediate gear is in transmission connection with the first input gear, and the second intermediate gear is in transmission connection with the second input gear;
the three speed reduction mechanisms include a first speed reduction mechanism, a second speed reduction mechanism and a third speed reduction mechanism, and the three piston assemblies include a first piston assembly, a second piston assembly and a third piston assembly; and
the first input gear is in transmission connection with the first driving portion, the second input gear is in transmission connection with the second driving portion, the first speed reduction mechanism and the second speed reduction mechanism are in transmission connection with the first intermediate gear, and the second speed reduction mechanism and the third speed reduction mechanism are in transmission connection with the second intermediate gear.

Optionally, the speed reduction mechanism includes an output gear and a planetary gear assembly which are in transmission connection with each other, where
the output gear is in transmission connection with the intermediate gear, and the planetary gear assembly is in transmission connection with the piston assembly.

Optionally, the output gear has a diameter greater than that of the intermediate gear.

Optionally, the planetary gear assembly includes a sun gear, a planetary gear, a ring gear and a planetary carrier; and
the sun gear is in transmission connection with the output gear, the planetary gear is arranged on the planetary carrier and is in transmission connection with the sun gear, the ring gear is fixedly arranged and meshes with the planetary gear, and the planetary carrier is in transmission connection with the piston assembly.

Optionally, the planetary carrier is configured as a disk plate, and the disk plate is rotatably arranged in the ring gear;
the disk plate includes a disk plate body and a planetary gear shaft, the planetary gear shaft is arranged on the disk plate body, and the planetary gear rotatably sleeves the planetary gear shaft; and
a gear hole is in a center of the disk plate, and the gear hole is in transmission connection with the piston assembly.

Optionally, the caliper body is provided with a first beam body, a second beam body and a third beam body, and the first beam body, the second beam body and the third beam body extend in the first direction and are spaced in a second direction;
a first accommodating recess is provided between the first beam body and the second beam body, a second accommodating recess is provided between the second beam body and the third beam body, the first driving portion is arranged in the first accommodating recess, and the second driving portion is arranged in the second accommodating recess;
piston cavities penetrated through in the first direction are provided inside the first beam body, the second beam body and the third beam body, and the piston assemblies are arranged in the piston cavities in a one-to-one corresponding manner; and
the first direction intersects with the second direction.

Optionally, the caliper body is further provided with a first hollow groove and a second hollow groove;
the first hollow groove is provided on one side of the first beam body farther away from the first accommodating recess in the second direction, and the second hollow groove is provided on one side of the third beam body farther away from the second accommodating recess in the second direction; and
the first beam body and the third beam body are symmetrically provided with respect to the second beam body, the first accommodating recess and the second accommodating recess are symmetrically provided with respect to the second beam body, and the first hollow groove and the second hollow groove are symmetrically provided with respect to the second beam body.

Optionally, the piston assembly includes a lead screw nut assembly, and the lead screw nut assembly includes a drive screw and a drive nut;
the drive screw extends in the first direction and is in transmission connection with the speed reduction mechanism, and the drive screw is axially locked and is circumferentially rotatable; and
the drive nut is circumferentially locked and axially and movably sleeves the drive screw, and the drive nut is used to abut against the brake pad and drive the brake pad to move.

Optionally, the lead screw nut assembly further includes a piston sleeve, the piston sleeve is connected to the drive nut, and the piston sleeve is used to abut against the brake pad;
the piston sleeve and the drive nut are integrally formed; or
the piston sleeve sleeves the drive nut, a first spherical surface is on an end surface of the drive nut, a second spherical surface is on an inner wall of the piston sleeve, and the first spherical surface is in spherical fit with the second spherical surface; or
the piston sleeve is located on one side of the drive nut in the first direction, and the piston sleeve is connected to the drive nut through a spherical hinge.

Optionally, the drive screw includes a smooth rod section, a stop flange, a screw section and a connecting gear;
the smooth rod section and the screw section extend in the first direction, and the stop flange is connected between the smooth rod section and the screw section;
the drive nut sleeves the screw section, and is used to abut against the stop flange; and
the connecting gear is connected to one end of the smooth rod section farther away from the stop flange, and is in transmission connection with the speed reduction mechanism.

Optionally, the driving module further includes an adapter plate;
the adapter plate is between the brake pad and the piston assembly; and
an area in which the adapter plate abuts against the brake pad is a first area, an area in which all the piston assemblies abut against the adapter plate is a second area, and the first area is greater than the second area.

Optionally, the adapter plate includes a first side surface and a second side surface facing away from each other in the first direction,
at least one recess is on the first side surface in a recessed manner, the recess and the piston assembly are provided in a one-to-one corresponding manner, and the recess allows to the corresponding piston assembly to be inserted; and
the first side surface is fixedly connected to the piston assembly, or the second side surface is fixedly connected to the brake pad.

Optionally, a first plane is at an end portion of a piston sleeve of the piston assembly, a second plane is on an inner wall of the recess, and the first plane is used to abut against the second plane; or
a first cambered surface is at the end portion of the piston sleeve of the piston assembly, a second cambered surface is on the inner wall of the recess, and the first cambered surface is used to abut against the second cambered surface.

Optionally, the driving module further includes a module housing, the module housing is detachably arranged on the caliper body, and the transmission mechanism and the speed reduction mechanism are arranged in the module housing.

Optionally, at least one piston cavity penetrated through in the first direction is provided inside the caliper body, the piston cavity and the piston assembly are provided in a one-to-one corresponding manner, and the piston assembly is arranged in the corresponding piston cavity;
at least one accommodating recess is provided in the caliper body in a recessed manner, the accommodating recess and the driving portion are correspondingly provided, and the driving portion is arranged in the corresponding accommodating recess; and
at least one driving opening and at least one piston opening are formed in the module housing, the driving opening and the accommodating recess are provided correspondingly and oppositely in the first direction, and the piston opening and the piston cavity are provided correspondingly and oppositely in the first direction.

A second aspect of the present invention provides a braking system. The braking system includes the electronic mechanical braking caliper described in the first aspect.

A third aspect of the present invention provides a vehicle. The vehicle includes the electronic mechanical braking caliper described in the first aspect or the braking system described in the second aspect.

The technical solution according to the embodiments of the present invention can have the following beneficial effects: firstly, the at least one piston assembly can uniformly distribute a braking force and reduce wear of the brake pad, and can be adapted to the brake pad having a large area. Thus, a braking capability and braking efficiency of the electronic mechanical braking caliper are improved.

Secondly, the speed reduction mechanism and the piston assembly are arranged in a one-to-one corresponding manner. Thus, motion of the piston assembly can be precisely adjusted, a braking process is more stable, vibration sensation during emergency braking is reduced, and driving comfort is improved.

Moreover, the risk of liquid leakage is reduced and reliability of braking and convenience of maintenance are improved through an electronic mechanical braking mode compared with a traditional hydraulic system.

It should be understood that the above general description and the following detailed description are illustrative and explanatory, and cannot limit the present invention.

### BRIEF DESCRIPTION OF DRAWINGS

The accompanying drawings here are incorporated in the description as a constituent part of the description, illustrate embodiments conforming to the present invention, and serve to explain the principles of the present invention together with the description.
FIG. 1 is a schematic diagram of a partial structure of an electronic mechanical braking caliper shown according to an example, where a module housing is not completely illustrated in the figure.
FIG. 2 is a schematic diagram of a partial structure of an electronic mechanical braking caliper shown according to an example, where a caliper body is not illustrated in the figure.
FIG. 3 is a schematic diagram of a three-dimensional structure of an electronic mechanical braking caliper shown according to an example.
FIG. 4 is a schematic diagram of a partial structure of an electronic mechanical braking caliper shown according to an example, where a schematic structural diagram of part of a planetary gear assembly and a piston assembly is illustrated in the figure.
FIG. 5 is a schematic structural diagram of an output gear and a sun gear of an electronic mechanical braking caliper shown according to an example.
FIG. 6 is a schematic structural diagram of a planetary carrier of a planetary gear assembly of an electronic mechanical braking caliper shown according to an example.
FIG. 7 is a schematic structural diagram of a lead screw nut assembly of an electronic mechanical braking caliper shown according to an example, where a piston sleeve is not illustrated in the figure.
FIG. 8 is a schematic structural diagram of a lead screw nut assembly of an electronic mechanical braking caliper shown according to an example, where a piston sleeve is illustrated in the figure.
FIG. 9 is a schematic structural diagram of a caliper body of an electronic mechanical braking caliper shown according to an example.
FIG. 10 is a schematic structural diagram of a module housing of an electronic mechanical braking caliper shown according to an example.
FIG. 11 is a schematic sketch of a partial section of an electronic mechanical braking caliper shown according to an example, where a first plane and a second plane are illustrated in the figure.
FIG. 12 is a schematic diagram showing cooperation of a piston sleeve, an adapter plate and a brake pad of an electronic mechanical braking caliper shown according to an example, where a first cambered surface and a second cambered surface are illustrated in the figure.
FIG. 13 is a schematic diagram showing cooperation of a piston sleeve, an adapter plate and a brake pad of an electronic mechanical braking caliper shown according to an example, where a first plane and a second plane are illustrated in the figure.

### DETAILED DESCRIPTION OF THE INVENTION

The examples will be described in detail here and are illustratively shown in the accompanying drawings. When the following description refers to the accompanying drawings, the same numbers in different accompanying drawings represent the same or similar elements unless otherwise indicated. The implementations described in the following examples do not denote all implementations consistent with the present invention. On the contrary, the implementations are merely examples of a device and a method consistent with some aspects of the present invention as detailed in the appended claims.

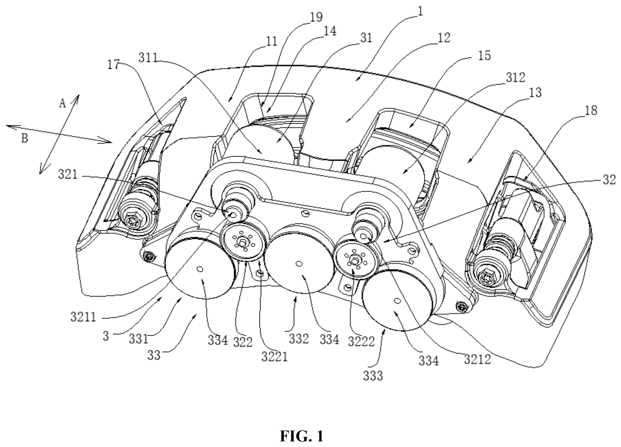

In the present invention, unless otherwise stated, directional words used, such as "inside and outside", refer to the inside and outside of specific structural contours; directional words used, such as "first direction and second direction", refer to two intersecting directions, and reference can be made to FIGs. 1-3 for details; and the terms used, such as "first and second", are used to distinguish one element from another, and do not denote sequence or importance.

With reference to FIGs. 1-13, the present invention provides an electronic mechanical braking caliper. The electronic mechanical braking caliper includes a caliper body 1, a brake pad 2 and a driving module 3. The brake pad 2 arranged on the caliper body 1. The driving module 3 arranged on the caliper body 1. The driving module 3 includes at least one driving portion 31, a transmission mechanism 32, at least one speed reduction mechanism 33 and at least one piston assembly 34. The driving portion 31 is in transmission connection with the speed reduction mechanism 33 through the transmission mechanism 32, the speed reduction mechanism 33 and the piston assembly 34 are arranged in a one-to-one corresponding manner, and the speed reduction mechanism 33 is in transmission connection with the corresponding piston assembly 34. The piston assembly 34 can move in a first direction A to abut against the brake pad 2 and drive the brake pad 2 to move.

In the above technical solution, firstly, at least one piston assembly 34 can uniformly distribute a braking force and reduce wear of the brake pad 2, and can be adapted to the brake pad 2 having a large area. Thus, a braking capability and braking efficiency of the electronic mechanical braking caliper are improved.

Secondly, the speed reduction mechanism 33 and the piston assembly 34 are arranged in a one-to-one corresponding manner. Thus, motion of the piston assembly 34 can be precisely adjusted, a braking process is more stable, vibration sensation during emergency braking is reduced, and driving comfort is improved.

Moreover, the risk of liquid leakage is reduced and reliability of braking and convenience of maintenance are improved through an electronic mechanical braking mode compared with a traditional hydraulic system.

Optionally, the driving portion 31 may be configured as a rotating motor, but a specific type of the driving portion 31 is not limited in the present invention.

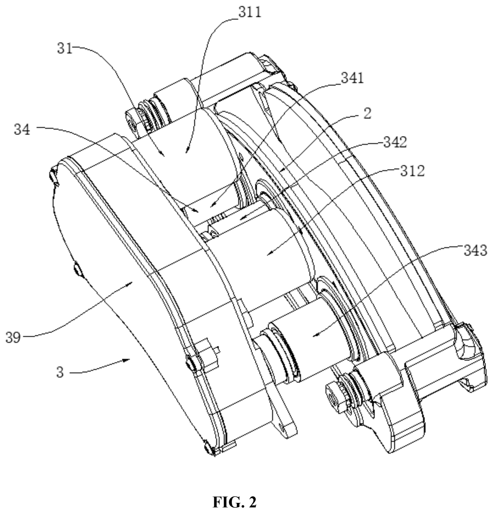

Optionally, with reference to FIGs. 1 and 2, the transmission mechanism 32 includes at least one input gear 321 and at least one intermediate gear 322. The input gear 321 is in transmission connection with the driving portion 31 in a one-to-one corresponding manner, and the intermediate gear 322 meshes with the input gear 321; and the intermediate gear 322 is in transmission connection with the speed reduction mechanism 33.

In the implementation, firstly, the input gear 321 is in transmission connection with the driving portion 31 in a one-to-one corresponding manner. Thus, direct and efficient power transmission from a driving source to a transmission system is ensured, and a response speed of braking is increased advantageously. Secondly, transmission connection between the intermediate gear 322 and the speed reduction mechanism 33 uniformly distributes power, and further allows torque to be further amplified through the speed reduction mechanism 33. Thus, a powerful braking force can be achieved under small driving power. Moreover, the torque can be efficiently amplified in a small size through a design of multi-stage gear transmission. Moreover, mechanical wear possibly caused by direct force action is reduced, and service life of an apparatus is prolonged.

Optionally, one driving portion 31, one input gear 321, one intermediate gear 322, one speed reduction mechanism 33 and one piston assembly 34 may be arranged. That is, the number of components is not limited in the present invention, and a form of driving cooperation of the single driving portion 31 and the single piston assembly 34 falls within the scope of protection.

In an implementation, one driving portion 31, one input gear 321 and one intermediate gear 322 are arranged, and two speed reduction mechanisms 33 and two piston assemblies 34 are arranged; and the intermediate gear 322 is in transmission connection with the two speed reduction mechanisms 33. That is, in the implementation, the two speed reduction mechanisms 33 share one intermediate gear 322. Thus, arrangements of parts are reduced, and structural compactness is designed advantageously. However, a specific arrangement mode is not limited in the present invention.

In another implementation, one driving portion 31 and one input gear 321 may be arranged, two intermediate gears 322 may be arranged, and two speed reduction mechanisms 33 and two piston assemblies 34 may be arranged. The two intermediate gears 322 are in transmission connection with the input gear 321, and the two intermediate gears 322 are in transmission connection with the two speed reduction mechanisms 33 in a one-to-one corresponding manner.

In another implementation, the at least one driving portion 31 includes a first driving portion 311 and a second driving portion 312. The at least one input gear 321 includes a first input gear 3211 and a second input gear 3212, and the at least one intermediate gear 322 includes a first intermediate gear 3221 and a second intermediate gear 3222. The at least one speed reduction mechanism 33 includes a first speed reduction mechanism 331 and a second speed reduction mechanism 332, and the at least one piston assembly 34 includes a first piston assembly 341 and a second piston assembly 342. The first driving portion 311, the first input gear 3211, the first intermediate gear 3221, the first speed reduction mechanism 331, and the first piston assembly 341 are correspondingly in transmission connection with each other. The second driving portion 312, the second input gear 3212, the second intermediate gear 3222, the second speed reduction mechanism 332 and the second piston assembly 342 are correspondingly in transmission connection with each other.

That is, in the implementation, two driving portions 31, two speed reduction mechanisms 33 and two piston assemblies 34 are correspondingly arranged. Correspondingly, two input gears 321 are arranged corresponding to the two driving portions 31, and two intermediate gears 322 are arranged, correspond to the two input gears 321 respectively, and correspond to the two speed reduction mechanisms 33 respectively. With such two braking structures independent of each other, even if one of the two driving portions 31 fails to operate, the other driving portion 31 can operate. Thus, safety of braking is ensured.

With reference to FIGs. 1-3, two driving portions 31 are arranged and are a first driving portion 311 and a second driving portion 312 respectively. Three speed reduction mechanisms 33 are arranged and are a first speed reduction mechanism 331, a second speed reduction mechanism 332 and a third speed reduction mechanism 333 respectively. Three piston assemblies 34 are arranged and are a first piston assembly 341, a second piston assembly 342 and a third piston assembly 343.

Two input gears 321 are arranged and are a first input gear 3211 and a second input gear 3212 respectively. Two intermediate gears 322 are arranged and are a first intermediate gear 3221 and a second intermediate gear 3222 respectively.

The first input gear 3211 is in transmission connection with the first driving portion 311, the second input gear 3212 is in transmission connection with the second driving portion 312. The first speed reduction mechanism 331 and the second speed reduction mechanism 332 are in transmission connection with the first intermediate gear 3221, and the second speed reduction mechanism 332 and the third speed reduction mechanism 333 are in transmission connection with the second intermediate gear 3222.

In this embodiment, firstly, power output of the whole system is more balanced through configurations of the first driving portion 311 and the second driving portion 312. Even if one driving portion fails, the other driving portion can still maintain a basic braking function. Thus, redundancy and safety of the system are improved. Secondly, power is distributed to the three piston assemblies 34. Such a design solution can distribute a braking force more uniformly while maintaining compactness of an overall structure. Thus, a braking effect and ride comfort are improved advantageously. Moreover, a reaction speed of braking can be effectively increased and control accuracy of braking can be effectively improved through reasonable gear matching and power distribution. Moreover, the risk that braking is affected by a single-point failure and fails can be reduced.

With reference to FIGs. 1-4, the speed reduction mechanism 33 includes an output gear 334 and a planetary gear assembly 335 which are in transmission connection with each other. The output gear 334 of the first speed reduction mechanism 331 is in transmission connection with the first intermediate gear 3221, and the planetary gear assembly 335 of the first speed reduction mechanism 331 is in transmission connection with the first piston assembly 341. The output gear 334 of the second speed reduction mechanism 332 is in transmission connection with the first intermediate gear 3221 and the second intermediate gear 3222, and the planetary gear assembly 335 of the second speed reduction mechanism 332 is in transmission connection with the second piston assembly 342. The output gear 334 of the third speed reduction mechanism 333 is in transmission connection with the second intermediate gear 3222, and the planetary gear assembly 335 of the third speed reduction mechanism 333 is in transmission connection with the third piston assembly 343.

Firstly, the output gear 334 of the first speed reduction mechanism 331 is in transmission connection with the first intermediate gear 3221, and the planetary gear assembly 335 is in transmission connection with the first piston assembly 341. Thus, the first piston assembly 341 can obtain high torque output from the first speed reduction mechanism 331 and enhance a force during braking.

The output gear 334 of the second speed reduction mechanism 332 is connected to both the first intermediate gear 3221 and the second intermediate gear 3222 such that the second speed reduction mechanism 332 can receive power from two power sources. Thus, power redundancy of braking is increased, and reliability of a braking system is improved. Moreover, the planetary gear assembly 335 of the second speed reduction mechanism 332 is in transmission connection with the second piston assembly 342. Thus, a highly efficient speed reduction ratio can be achieved, and a braking force provided by the second piston assembly 342 during braking can be improved.

The output gear 334 of the third speed reduction mechanism 333 is in transmission connection with the second intermediate gear 3222, and the planetary gear assembly 335 is in transmission connection with the third piston assembly 343 such that the third piston assembly 343 can operate independently. Thus, it is ensured that excellent braking performance can be maintained even under a complex road condition.

Secondly, use of the planetary gear assembly 335 can allow efficient speed reduction in compact space. Thus, output torque is increased. Moreover, a size and weight are reduced, and overall effectiveness of braking is improved.

Moreover, multi-stage speed reduction and torque amplification are achieved while compactness of a structure is ensured through a design of the plurality of intermediate gears 332 and the planetary gear assembly 335, so as to satisfy the requirements of different braking strength.

Moreover, the above output gear 334 has a diameter greater than that of the intermediate gear 322. Thus, initial speed reduction and torque increase can be achieved, and the braking effect can be further improved.

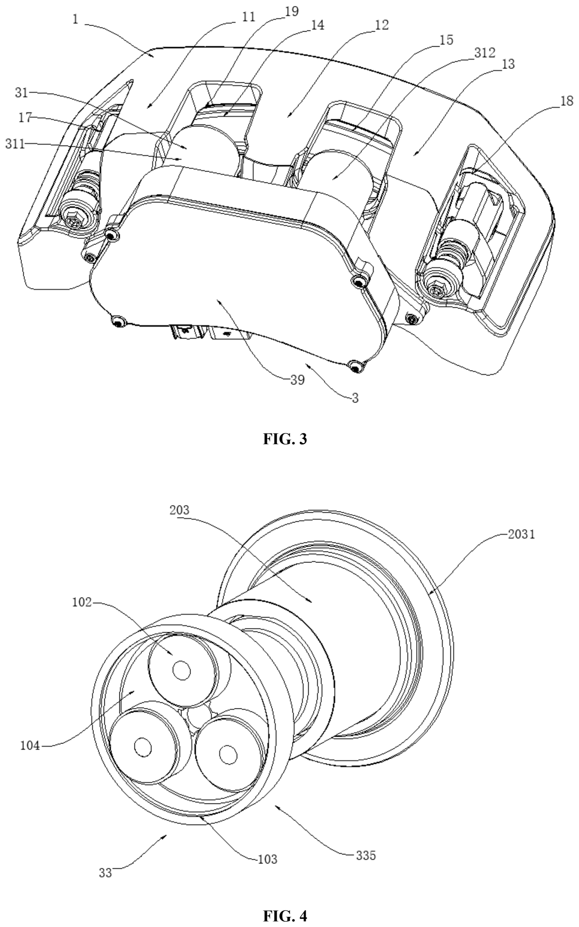

In an optional implementation, with reference to FIGs. 4-6, the planetary gear assembly 335 includes a sun gear 101, a planetary gear 102, a ring gear 103 and a planetary carrier 104. The sun gear 101 is in transmission connection with the output gear 334, the planetary gear 102 is arranged on the planetary carrier 104 and is in transmission connection with the sun gear 101. The ring gear 103 is fixedly arranged and meshes with the planetary gear 102, and the planetary carrier 104 is used for transmission connection with the piston assembly 343.

In the implementation, a high speed reduction ratio can be achieved in relatively compact space through a combination of the sun gear 101, the planetary gear 102, the ring gear 103 and the planetary carrier 104. This means that even if an input rotating speed is high, a speed output to the piston assembly 34 can be effectively controlled. Thus, large torque output is provided, and a sufficient braking force is ensured.

Moreover, a plurality of planetary gears 102 rotate around the sun gear 101. Thus, a load can be distributed more uniformly. When the planetary gear 102 meshes with the ring gear 103, it can be ensured that each planetary gear 102 participates in load sharing. Thus, a load carrying capability and durability are improved.

Moreover, a position and a speed of the piston assembly 34 can be controlled more accurately through transmission of the planetary gear assembly 335. The planetary carrier 104 as a final output part can ensure that the piston assembly 34 moves according to preset requirements. Thus, an accurate braking effect is achieved. However, a specific structural design of the planetary gear assembly 335 is not limited in the present invention.

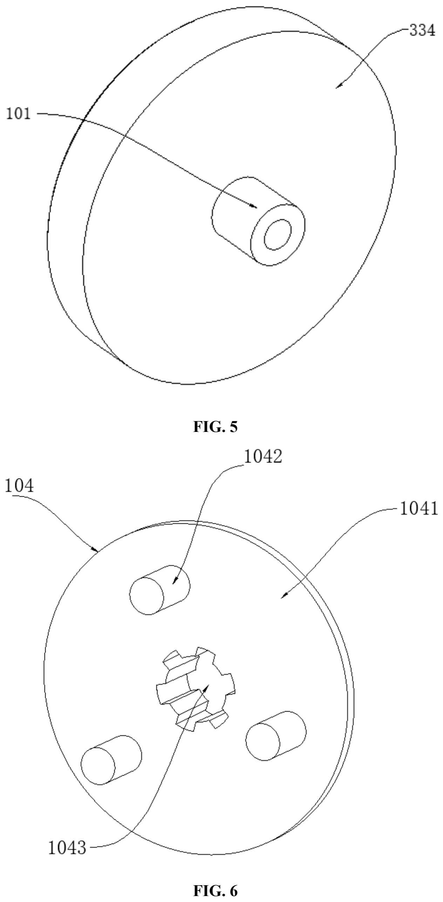

Moreover, it should be noted that in some schematic diagrams, for example, as shown in FIG. 5, the output gear 334 and the sun gear 101 are simply illustrated in the present invention, and tooth structures of the corresponding gears are not completely illustrated.

With reference to FIG. 6, the planetary carrier 104 is configured as a disk plate, and the disk plate is rotatably arranged in the ring gear 103. The disk plate includes a disk plate body 1041 and a planetary gear shaft 1042, where the planetary gear shaft 1042 is arranged on the disk plate body 1041, and the planetary gear 102 rotatably sleeves the planetary gear shaft 1042. A gear hole 1043 is formed in a center of the disk plate, and the gear hole 1043 is used for transmission connection with the piston assembly 34.

The planetary carrier 104 is configured as the disk plate. Higher rigidity and stability are provided through such a design. The disk plate body 1041 may ensure stability of the planetary gear 102 during rotation and reduce vibration and noise as a supporting platform for the planetary gear 102.

The planetary gear shaft 1042 is arranged on the disk plate body 1041, and the planetary gear 102 rotatably sleeves the planetary gear shaft 1042. Friction between the planetary gear 102 and the planetary carrier 104 can be reduced through such a design. Thus, wear is reduced, and service life is prolonged.

The disk plate is rotatably arranged in the ring gear 103. This means that the disk plate can freely rotate without being limited by the ring gear. With such a design, a mounting process is simplified, and further subsequent inspection and maintenance are convenient.

Moreover, the gear hole 1043 formed in the center of the disk plate is used for transmission connection with the piston assembly 34. Such a design can ensure that motion of the planetary carrier 104 can be accurately transmitted to the piston assembly, Thus, accurate braking control is achieved. Moreover, the planetary carrier 104 is directly connected to the piston assembly 34 through the gear hole 1043. Thus, intermediate links are reduced, and a response speed of braking is increased. This means that response to operation of a driver can be more rapid, and driving safety is improved.

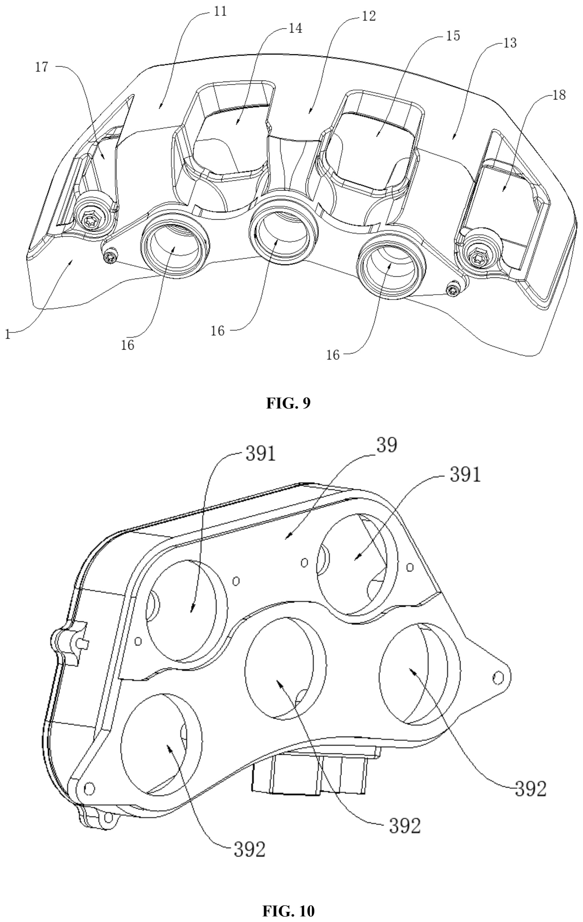

Optionally, with reference to FIG. 9, the caliper body 1 is provided with a first beam body 11, a second beam body 12 and a third beam body 13, and the first beam body 11, the second beam body 12 and the third beam body 13 extend in the first direction A and are spaced in a second direction B. A first accommodating recess 14 is provided between the first beam body 11 and the second beam body 12, and a second accommodating recess 15 is provided between the second beam body 12 and the third beam body 13. The first driving portion 311 is arranged in the first accommodating recess 14, and the second driving portion 312 is arranged in the second accommodating recess 15. Piston cavities 16 penetrated through in the first direction A are provided inside the first beam body 11, the second beam body 12 and the third beam body 13, and the piston assemblies 34 are arranged in the piston cavities 16 in a one-to-one corresponding manner. The first direction A intersects with the second direction B.

In this embodiment, an overall structure of the caliper is more stable through a three-beam design of the first beam body 11, the second beam body 12 and the third beam body 13. Thus, deformation resistance is enhanced.

Moreover, the piston cavities 16 are provided inside the three beam bodies respectively, and the piston assembly 34 is arranged in each piston cavity 16. Thus, operation reliability and stability of the caliper are improved.

Moreover, with a design of the first accommodating recess 14 and the second accommodating recess 15, the first driving portion 311 and the second driving portion 312 are integrated into the caliper body 1. Thus, the first driving portion 311 and the second driving portion 312 are protected, and external space occupation is reduced. Thus, an overall design is more compact.

In addition, it is convenient to replace or maintain the piston assembly through an independent design of the piston cavities 16, as there is no need of dismount an entire device.

Moreover, the caliper body 1 may be formed through integral forming, such as nodular cast iron or aluminum alloy integral forming, which is not limited in the present invention.

Optionally, with reference to FIG. 9, the caliper body 1 is further provided with a first hollow groove 17 and a second hollow groove 18. The first hollow groove 17 is provided on one side of the first beam body 11 farther away from the first accommodating recess 14 in the second direction B, and the second hollow groove 18 is provided on one side of the third beam body 13 farther away from the second accommodating recess 15 in the second direction B. The first beam body 11 and the third beam body 13 are symmetrically provided with respect to the second beam body 12, the first accommodating recess 14 and the second accommodating recess 15 are symmetrically provided with respect to the second beam body 12, and the first hollow groove 17 and the second hollow groove 18 are symmetrically provided with respect to the second beam body 12.

In the implementation, a lightweight effect of the caliper body 1 is improved by providing the first hollow groove 17 and the second hollow groove 18, overall weight of the caliper body 1 is reduced by removing a material of a non-bearing part, and strength of the caliper body 1 is ensured while material utilization is improved. In addition, a symmetrical design can not only be beautiful, but also ensure that stress distribution on two sides is uniform when an external force is born. Thus, distortion or deformation of the caliper body 1 caused by an asymmetrical design is prevented, and stability and reliability of the caliper body 1 are improved.

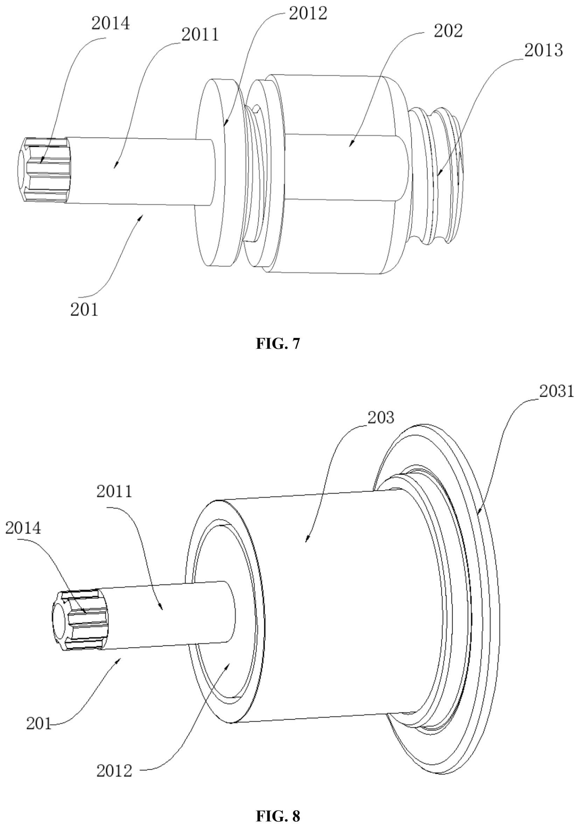

In other implementations, with reference to FIGs. 7 and 8, the piston assembly 34 is constructed as a lead screw nut assembly. The lead screw nut assembly includes a drive screw 201 and a drive nut 202. The drive screw 201 extends in the first direction A and is in transmission connection with the speed reduction mechanism 33; the drive screw 201 is axially locked and is rotatably arranged in the piston cavity 16. The drive nut 202 is circumferentially locked and axially and movably sleeves the drive screw 201, and the drive nut 202 is used to abut against and drive the brake pad 2 to move.

Firstly, the lead screw nut assembly typically has high linear positioning precision, and can be adjusted at a high level of precision. Thus, when the lead screw nut assembly is used in the braking caliper, a position of the brake pad 2 can be accurately controlled. Thus, an accurate and stable braking effect is achieved.

Secondly, the lead screw nut assembly includes the drive screw 201 and the drive nut 202. Such a combination can effectively transfer power by converting rotation motion of a thread into linear motion. The drive screw 201 extends in the first direction A and is in transmission connection with the speed reduction mechanism 33. This means that the rotation motion of the driving portion 31 (for example, a rotating motor) is converted into rotation of the drive screw 201 after speed reduction, and is further converted into the linear motion of the drive nut 202. Thus, noise is reduced while transmission efficiency is improved.

Optionally, with reference to FIG. 7, the drive screw 201 includes a smooth rod section 2011, a stop flange 2012, a screw section 2013 and a connecting gear 2014. The smooth rod section 2011 and the screw section 2013 extend in the first direction A, and the stop flange 2012 is connected between the smooth rod section 2011 and the screw section 2013. The drive nut 202 sleeves the screw section 2013, and is used to abut against the stop flange 2012; and the connecting gear 2014 is connected to one end of the smooth rod section 2011 farther away from the stop flange 2012, and is used for transmission connection with the speed reduction mechanism 33.

In this embodiment, the smooth rod section 2011 and the screw section 2013 extend in the first direction A. With such a design, consistency of the drive screw 201 in an axial direction is ensured, and it is advantageously ensured that no additional radial force is generated during transmission. Thus, wear is reduced, and life of the system is prolonged.

The stop flange 2012 is connected between the smooth rod section 2011 and the screw section 2013. The stop flange 2012 provides a limiting function for the drive nut 202. When the drive nut 202 moves along the screw section 2013 to a position of the stop flange 2012, the stop flange 2012 limits further motion of the drive nut. Thus, it is ensured that the drive nut 202 can accurately make contact with the brake pad 2 and generate a braking effect when the drive nut is at a predetermined position. Moreover, the stop flange 2012 can further prevent the drive nut 202 from being separated from the screw section 2013.

The connecting gear 2014 is connected to one end of the smooth rod section 2011 farther away from the stop flange 2012 and is used for transmission connection with the first speed reduction mechanism 33 and/or the second speed reduction mechanism 34. With such a design, rotation motion from an electric motor can be transmitted to the connecting gear 2014 after a speed of the rotation motion from the electric motor is reduced through the speed reduction mechanism 33, and finally drives the drive screw 201 to rotate. Through gear transmission, torque output of the driving portion 31 (for example, a rotating motor) can be effectively amplified, and the speed is reduced to ensure that the drive nut 202 is pushed to achieve braking through a sufficient force.

In other embodiments, with reference to FIG. 8, the lead screw nut assembly further includes a piston sleeve 203. The piston sleeve 203 is connected to the drive nut 202, the piston sleeve 203 is used to abut against the brake pad 2, and the brake pad 2 abuts against the brake disk 1000.

Firstly, the piston sleeve 203 is used to abut against the brake pad 2. Such a design has the advantage that the piston sleeve can provide a large contact surface to uniformly distribute a thrust of the drive nut 202 to the brake pad 2. Thus, it is ensured that the brake pad 2 can smoothly make contact with a braking surface to achieve an effective braking effect.

Secondly, the drive nut 202 can be protected from direct wear by introducing the piston sleeve 203 as an intermediate member, and the piston sleeve acts as a buffer area between the drive nut 202 and the brake pad 2. Thus, service life of the drive nut 202 can be prolonged, and maintenance frequency and cost can be reduced.

Moreover, since the piston sleeve 203 makes direct contact with the brake pad 2, selection of a shape and a material of the piston sleeve can be optimized according to actual braking requirements to ensure that stable performance can be provided under different temperature and pressure conditions, which is not limited in the present invention.

Moreover, in order to improve sealing performance of the piston assembly, a sealing ring 2031 may be arranged at an end portion of the piston sleeve 203.

In other variant implementations, the above piston sleeve 203 and the above drive nut 202 may be constructed as an integrated structure, which is not limited in the present invention.

In terms of selection of connection modes of the piston sleeve 203 and the drive nut 202, the present invention provides the following connection modes:
1) The piston sleeve 203 has a diameter greater than that of the drive nut 202, the piston sleeve 203 sleeves the drive nut 202, the piston sleeve is in interference fit with the drive nut, a first spherical surface is formed on an end surface of the drive nut 202, a second spherical surface is formed on an inner wall of the piston sleeve 203, and the first spherical surface is in spherical fit with the second spherical surface.
2) The piston sleeve 203 has a diameter greater than that of the drive nut 202, the piston sleeve 203 sleeves the drive nut 202, the piston sleeve and the drive nut are detachably connected in a clamped manner or in a threaded connection manner, a first spherical surface is formed at an end surface of the drive nut 202, a second spherical surface is formed on an inner wall of the piston sleeve 203, and the first spherical surface is in spherical fit with the second spherical surface.
3) The piston sleeve 203 may have a diameter equal to or less than that of the drive nut 202, the piston sleeve 203 does not sleeve the drive nut 202, but the piston sleeve and the drive nut are arranged side by side, and the piston sleeve 203 is connected to the drive nut 202 through a spherical hinge.

In the above three connection modes, whether the piston sleeve 203 and the drive nut 202 are fitted through two spherical surfaces or through a spherical hinge, the piston sleeve 203 can be offset by an angle to some extent under the condition that the brake pad 2 is worn, such that the piston sleeve 203 can vertically apply a braking force to the brake pad 2.

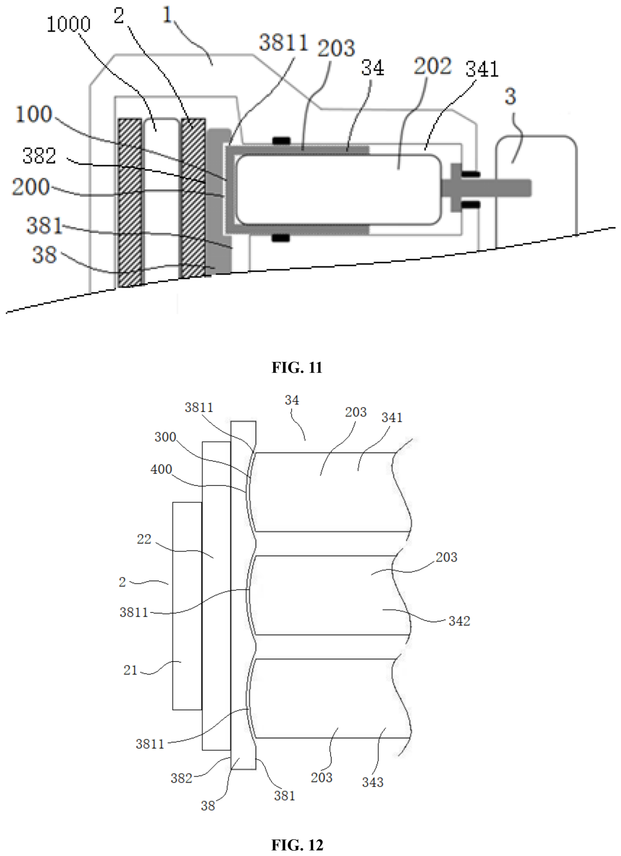

Optionally, with reference to FIG. 11, the driving module 3 further includes an adapter plate 38. An area in which the adapter plate 38 abuts against the brake pad 2 is a first area, an area in which all the piston assemblies 34 abut against the adapter plate 38 is a second area, and the first area is greater than the second area.

In this embodiment, the first area is greater than the second area, and this means that a portion at which the adapter plate 38 makes contact with the brake pad 2 has a larger surface area, such that pressure applied by the piston assembly 34 is more uniformly distributed on the brake pad 2 advantageously. Thus, wear or damage caused by excessively large local pressure is reduced, and durability and reliability of the braking system are improved.

Moreover, the larger contact area means that the braking force can be transmitted more effectively during braking. Thus, a braking effect is more stable and more reliable. Uniform pressure distribution advantageously ensures that a vehicle can be stopped rapidly and safely especially in a case of emergency braking.

Optionally, with reference to FIG. 11, the adapter plate 38 includes a first side surface 381 and a second side surface 382 facing away from each other in the first direction A. At least one recess 3811 is provided on the first side surface 381 in a recessed manner. The recess 3811 and the piston assembly 34 are provided in a one-to-one corresponding manner, and the recess 3811 allows the corresponding piston assembly 34 to be inserted. The first side surface 381 is fixedly connected to the piston assembly 34, or the second side surface 382 is fixedly connected to the brake pad 2.

The recess 3811 is used to allow the piston assembly 34 to be inserted. The piston assembly 34 can be accurately positioned on the adapter plate 38 through such a design. Thus, consistency and stability are maintained, and further, a mounting error is reduced advantageously.

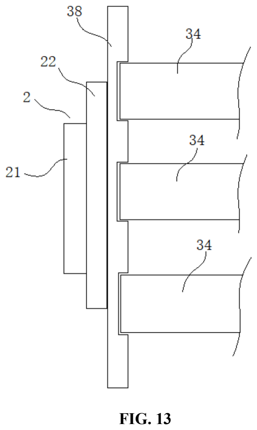

Moreover, for connection of the adapter plate 38, in an implementation, the adapter plate 38 may be connected to the brake pad 2. Specifically, with reference to a schematic sketch of FIG. 13, the brake pad 2 may include a brake pad body 21 and a metal backing plate 22. The metal backing plate 22 is connected to the brake pad body 21, and the adapter plate 38 is connected to the metal backing plate 22.

In another implementation, the adapter plate 38 may be connected to the piston assembly 34, which is not limited in the present invention.

Optionally, with reference to FIG. 11, a first plane 100 is formed at an end portion of a piston sleeve 203 of the piston assembly 34, a second plane 200 is formed on an inner wall of the recess 3811, and the first plane 100 is used to abut against the second plane 200. The first plane 100 is used to abut against the second plane 200. Such a structural design ensures that the piston sleeve 203 abuts against the adapter plate 38 more firmly and accurately. Through a plane-to-plane contact mode, a large contact area can be provided, a force can be further dispersed, local wear is reduced, and overall life is prolonged.

In another implementation, with reference to FIGs. 11 and 12, a first cambered surface 300 is formed at the end portion of the piston sleeve 203 of the piston assembly 34, a second cambered surface 400 is formed on the inner wall of the recess 3811, and the first cambered surface 300 is used to abut against the second cambered surface 400.

Low parallelism of the two piston assemblies can be effectively avoided by making the first cambered surface 300 abut against the second cambered surface 400.

Specifically, a large contact area is provided through a design of cambered surfaces. Even if the parallelism between the piston sleeve 203 and the adapter plate 38 is low, contact between the cambered surfaces can still ensure proper guidance of the piston assemblies. The cambered surfaces can provide multi-point contact. Even if one of points deviates from an ideal position, other points can still maintain stability of abutment.

Moreover, contact between the first cambered surface 300 and the second cambered surface 400 may allow angular deviation within a range to some extent. Thus, even if a slight error exists in an assembly or manufacturing process, the piston assembly can still operate smoothly. Such a design can help the system to be automatically adjusted to an optimal operation state, and reduce wear caused by low parallelism.

Moreover, with reference to FIG. 10, the driving module 3 further includes a module housing 39. The module housing 39 is detachably arranged on the caliper body 1, and the transmission mechanism 32 and the speed reduction mechanism 33 are arranged in the module housing 39.

By arranging the module housing 39, the transmission mechanism 32 and the speed reduction mechanism 33 are effectively protected, and service life is prolonged. Moreover, for a mounting mode of the module housing 39, the module housing may be detachably connected to the caliper body 1 through a bolt or a screw, which is not limited in the present invention.

With reference to FIGs. 9 and 10, at least one piston cavity 16 penetrated through in the first direction A is provided inside the caliper body 1, the piston cavity 16 and the piston assembly 34 are provided in a one-to-one corresponding manner, and the piston assembly 34 is arranged in the corresponding piston cavity 16. At least one accommodating recess 19 is provided in the caliper body 1 in a recessed manner, the accommodating recess 19 and the driving portion 31 are correspondingly provided, and the driving portion 31 is arranged in the corresponding accommodating recess 19. At least one driving opening 391 and at least one piston opening 392 are formed in the module housing 39, the driving opening 391 and the accommodating recess 19 are provided correspondingly and oppositely in the first direction A, and the piston opening 392 and the piston cavity 16 are provided correspondingly and oppositely in the first direction A.

In the implementation, the driving opening 391 and the accommodating recess 19 are provided oppositely in the first direction A, and thus operation of the driving portion 31 can be performed without hindrance. The piston opening 392 and the piston cavity 16 are provided oppositely in the first direction A, and thus it is ensured that the piston assembly 34 can smoothly receive the power from the driving portion 31.

In a second aspect of the present invention, a braking system is further provided. The braking system includes the above electronic mechanical braking caliper. For example, the braking system further includes a controller. The controller is electrically connected to a driving portion 31, thus increasing a speed of response.

In a third aspect of the present invention, in addition, a vehicle is further provided. The vehicle includes the above electronic mechanical braking caliper and the above braking system.

## Claims

1. An electronic mechanical braking caliper, comprising:
a caliper body (1);
a brake pad (2) arranged on the caliper body (1); and
a driving module (3) arranged on the caliper body (1), wherein
the driving module (3) comprises at least one driving portion (31), a transmission mechanism (32), at least one speed reduction mechanism (33) and at least one piston assembly (34),
the driving portion (31) is in transmission connection with the speed reduction mechanism (33) through the transmission mechanism (32), the speed reduction mechanism (33) and the piston assembly (34) are arranged in a one-to-one corresponding manner, and the speed reduction mechanism (33) is in transmission connection with the corresponding piston assembly (34); and
the piston assembly (34) moves in a first direction (A) to abut against the brake pad (2) and drive the brake pad (2) to move.

2. The electronic mechanical braking caliper according to claim 1, wherein the transmission mechanism (32) comprises at least one input gear (321) and at least one intermediate gear (322);
the input gear (321) is in transmission connection with the driving portion (31) in a one-to-one corresponding manner, and the intermediate gear (322) meshes with the input gear (321); and
the intermediate gear (322) is in transmission connection with the speed reduction mechanism (33).

3. The electronic mechanical braking caliper according to claim 2, wherein one driving portion (31), one input gear (321), one speed reduction mechanism (33) and one piston assembly (34) are arranged, and the input gear (321) is in transmission connection with the speed reduction mechanism (33) through the at least one intermediate gear (322); or
one driving portion (31) and one input gear (321) are arranged, two speed reduction mechanisms (33) and two piston assemblies (34) are arranged, and the input gear (321) is in transmission connection with the two speed reduction mechanisms (33) through the at least one intermediate gear (322); or
two driving portions (31), two input gears (321), two speed reduction mechanisms (33) and two piston assemblies (34) are arranged, and the two input gears (321) are in transmission connection with the two speed reduction mechanisms (33) through the at least one intermediate gear (322); or
two driving portions (31) and two input gears (321) are arranged, three speed reduction mechanisms (33) and three piston assemblies (34) are arranged, and the two input gears (321) are in transmission connection with the three speed reduction mechanisms (33) through the at least one intermediate gear (322).

4. The electronic mechanical braking caliper according to claim 3, wherein the two driving portions (31) comprise a first driving portion (311) and a second driving portion (312);
the two input gears (321) comprise a first input gear (3211) and a second input gear (3212);
the at least one intermediate gear (322) comprises a first intermediate gear (3221) and a second intermediate gear (3222), the first intermediate gear (3221) is in transmission connection with the first input gear (3211), and the second intermediate gear (3222) is in transmission connection with the second input gear (3212);
the three speed reduction mechanisms (33) comprise a first speed reduction mechanism (331), a second speed reduction mechanism (332) and a third speed reduction mechanism (333), and the three piston assemblies (34) comprise a first piston assembly (341), a second piston assembly (342) and a third piston assembly (343); and
the first input gear (3211) is in transmission connection with the first driving portion (311), the second input gear (3212) is in transmission connection with the second driving portion (312), the first speed reduction mechanism (331) and the second speed reduction mechanism (332) are in transmission connection with the first intermediate gear (3221), and the second speed reduction mechanism (332) and the third speed reduction mechanism (333) are in transmission connection with the second intermediate gear (3222).

5. The electronic mechanical braking caliper according to any one of claims 2-4, wherein the speed reduction mechanism (33) comprises an output gear (334) and a planetary gear assembly (335) which are in transmission connection with each other; and
the output gear (334) is in transmission connection with the intermediate gear (322), and the planetary gear assembly (335) is in transmission connection with the piston assembly (34);
optionally, wherein the output gear (334) has a diameter greater than that of the intermediate gear (322).

6. The electronic mechanical braking caliper according to claim 5, wherein the planetary gear assembly (335) comprises a sun gear (101), a planetary gear (102), a ring gear (103) and a planetary carrier (104); and
the sun gear (101) is in transmission connection with the output gear (334), the planetary gear (102) is arranged on the planetary carrier (104) and is in transmission connection with the sun gear (101), the ring gear (103) is fixedly arranged and meshes with the planetary gear (102), and the planetary carrier (104) is in transmission connection with the piston assembly (34);
optionally, wherein the planetary carrier (104) is configured as a disk plate, and the disk plate is rotatably arranged in the ring gear (103);
the disk plate comprises a disk plate body (1041) and a planetary gear shaft (1042), the planetary gear shaft (1042) is arranged on the disk plate body (1041), and the planetary gear (102) rotatably sleeves the planetary gear shaft (1042); and
a gear hole (1043) is in a center of the disk plate, and the gear hole (1043) is in transmission connection with the piston assembly (34).

7. The electronic mechanical braking caliper according to claim 4, wherein the caliper body (1) is provided with a first beam body (11), a second beam body (12) and a third beam body (13), and the first beam body (11), the second beam body (12) and the third beam body (13) extend in the first direction (A) and are spaced in a second direction (B);
a first accommodating recess (14) is provided between the first beam body (11) and the second beam body (12), a second accommodating recess (15) is provided between the second beam body (12) and the third beam body (13), the first driving portion (311) is arranged in the first accommodating recess (14), and the second driving portion is arranged in the second accommodating recess (15);
piston cavities (16) penetrated through in the first direction (A) are provided inside the first beam body (11), the second beam body (12) and the third beam body (13), and the piston assemblies (34) are arranged in the piston cavities (16) in a one-to-one corresponding manner; and
the first direction (A) intersects with the second direction (B);
optionally, wherein the caliper body (1) is further provided with a first hollow groove (17) and a second hollow groove (18);
the first hollow groove (17) is provided on one side of the first beam body (11) farther away from the first accommodating recess (14) in the second direction (B), and the second hollow groove (18) is provided on one side of the third beam body (13) farther away from the second accommodating recess (15) in the second direction (B); and
the first beam body (11) and the third beam body (13) are symmetrically provided with respect to the second beam body (12), the first accommodating recess (14) and the second accommodating recess (15) are symmetrically provided with respect to the second beam body (12), and the first hollow groove (17) and the second hollow groove (18) are symmetrically provided with respect to the second beam body (12).

8. The electronic mechanical braking caliper according to any one of claims 1-7, wherein the piston assembly (34) comprises a lead screw nut assembly, and the lead screw nut assembly comprises a drive screw (201) and a drive nut (202);
the drive screw (201) extends in the first direction (A) and is in transmission connection with the speed reduction mechanism (33), and the drive screw (201) is axially locked and is circumferentially rotatable; and
the drive nut (202) is circumferentially locked and axially and movably sleeves the drive screw (201), and the drive nut (202) is used to abut against the brake pad (2) and drive the brake pad (2) to move.

9. The electronic mechanical braking caliper according to claim 8, wherein the lead screw nut assembly further comprises a piston sleeve (203), the piston sleeve (203) is connected to the drive nut (202), and the piston sleeve (203) is used to abut against the brake pad (2);
wherein the piston sleeve (203) and the drive nut (202) are integrally formed; or
the piston sleeve (203) sleeves the drive nut (202), a first spherical surface is on an end surface of the drive nut (202), a second spherical surface is on an inner wall of the piston sleeve (203), and the first spherical surface is in spherical fit with the second spherical surface; or
the piston sleeve (203) is located on one side of the drive nut (202) in the first direction (A), and the piston sleeve (203) is connected to the drive nut (202) through a spherical hinge;
optionally, wherein the drive screw (201) comprises a smooth rod section (2011), a stop flange (2012), a screw section (2013) and a connecting gear (2014);
the smooth rod section (2011) and the screw section (2013) extend in the first direction (A), and the stop flange (2012) is connected between the smooth rod section (2011) and the screw section (2013);
the drive nut (202) sleeves the screw section (2013), and is used to abut against the stop flange (2012); and
the connecting gear (2014) is connected to one end of the smooth rod section (2011) farther away from the stop flange (2012), and is in transmission connection with the speed reduction mechanism (33).

10. The electronic mechanical braking caliper according to any one of claims 1-9, wherein the driving module (3) further comprises an adapter plate (38);
the adapter plate (38) is between the brake pad (2) and the piston assembly (34); and
an area in which the adapter plate (38) abuts against the brake pad (2) is a first area, an area in which all the piston assemblies (34) abut against the adapter plate (38) is a second area, and the first area is greater than the second area.

11. The electronic mechanical braking caliper according to claim 10, wherein the adapter plate (38) comprises a first side surface (381) and a second side surface (382) facing away from each other in the first direction (A);
at least one recess (3811) is on the first side surface (381) in a recessed manner, the recess (3811) and the piston assembly (34) are provided in a one-to-one corresponding manner, and the recess (3811) allows to the corresponding piston assembly (34) to be inserted; and
the first side surface (381) is fixedly connected to the piston assembly (34), or the second side surface (382) is fixedly connected to the brake pad (2).

12. The electronic mechanical braking caliper according to claim 11, wherein a first plane (100) is at an end portion of a piston sleeve (203) of the piston assembly (34), a second plane (200) is on an inner wall of the recess (3811), and the first plane (100) is used to abut against the second plane (200); or
a first cambered surface (300) is at the end portion of the piston sleeve (203) of the piston assembly (34), a second cambered surface (400) is on the inner wall of the recess (3811), and the first cambered surface (300) is used to abut against the second cambered surface (400).

13. The electronic mechanical braking caliper according to any one of claims 1-12, wherein the driving module (3) further comprises a module housing (39), the module housing (39) is detachably arranged on the caliper body (1), and the transmission mechanism (32) and the speed reduction mechanism (33) are arranged in the module housing (39);
optionally, wherein at least one piston cavity (16) penetrated through in the first direction (A) is provided inside the caliper body (1), the piston cavity (16) and the piston assembly (34) are provided in a one-to-one corresponding manner, and the piston assembly (34) is arranged in the corresponding piston cavity (16);
at least one accommodating recess (19) is provided in the caliper body (1) in a recessed manner, the accommodating recess (19) and the driving portion (31) are correspondingly provided, and the driving portion (31) is arranged in the corresponding accommodating recess (19); and
at least one driving opening (391) and at least one piston opening (392) are formed in the module housing (39), the driving opening (391) and the accommodating recess (392) are provided correspondingly and oppositely in the first direction (A), and the piston opening (392) and the piston cavity (16) are provided correspondingly and oppositely in the first direction (A).

14. A braking system, comprising: the electronic mechanical braking caliper according to any one of claims 1-13.

15. A vehicle, comprising: the electronic mechanical braking caliper according to any one of claims 1-13 or the braking system according to claim 14.
